# EUROPEAN PATENT SPECIFICATION

(11) **EP 0 604 334 B1**
(45) Date of publication and mention of the grant of the patent: **26.02.1997**
(21) Application number: 93420504.8
(22) Date of filing: 21.12.1993
(51) Int. Cl.: G03G 15/16, G03G 21/00

(54) **Particle transfer roller and method of using same**
Partikelübertragungswalze und Verfahren zur Verwendung derselben
Rouleau de transfert de particules et procédé d'utilisation

(30) Priority: 22.12.1992 US 994577
(43) Date of publication of application: 29.06.1994
(73) Proprietor: EASTMAN KODAK COMPANY, Rochester, New York 14650-2201 (US)
(72) Inventor: Ramos, Fernando, Jr., c/o Eastman Kodak Company, Rochester, New York 14650-2201 (US); Yacobucci, Paul Daniel, c/o Eastman Kodak Company, Rochester, New York 14650-2201 (US)
(74) Representative: Parent, Yves

(56) References cited:
- EP-A- 0 272 587
- EP-A- 0 421 299
- US-A- 3 959 573
- US-A- 5 156 915

## Description

This invention relates to a particle transfer roller comprising polyurethane copolymerized with a charge control agent. The invention also relates to a method of cleaning a moving web using the particle transfer roller.

Removal of particulate contamination from the surface of a web is important in many applications, such as cleaning exposed photographic film used in film projection systems, or in the manufacturing of photographic film and the like. Systems for removing particulate contamination from a web surface are well known. Examples of such systems include air knives and suction cleaning systems.

Particle transfer rollers that clean a web upon contact have proven to be particularly effective in removing particles from web surfaces. A particle transfer roller typically has an adhesive or tacky surface to which particles from the web surface adhere upon contact. A particle transfer roller having a tacky surface, such as a polyurethane roller having a Shore hardness in the range of 15 to 40, is often preferred over a particle transfer roller with an adhesive surface to avoid depositing adhesive on the web during cleaning.

A web, however, tends to accrue an electrostatic charge as it is conveyed over a roller, and the accrued charge tends to attract particulate contamination. Charge control agents can be added to a particle transfer roller during fabrication of the roller to inhibit the formation of the electrostatic charge. A problem with such charge control agents is that the charge control agents migrate to the roller surface and can be deposited on the web, decreasing the cleaning efficiency of the particle transfer roller. Another problem is that they are hydrophilic and can contaminate the web with moisture. Yet another problem is that they can be exhausted over a period of use, decreasing their effectiveness.

US-A-4,729,925 discloses a copier transfer roller comprising polyurethane roller copolymerized with a nonleachable charge control agent capable of accepting an electrical bias for receiving and transferring toner. The disclosed copier transfer roller, however, is unacceptable for use as a particle transfer roller. The roller has a high durometer of from 40 to 90 Shore A such that the roller surface will not have a tendency to retain toner particles and prevent transfer of toner from the roller surface to the paper. The opposite property is desirable in a particle transfer roller, where a lower durometer is desirable to obtain a good surface affinity for particle transfer to the roller surface.

It is an object of the invention to provide a particle transfer roller and method for its use having a nonleachable charge control agent therein. It is also an object of the invention to provide a particle transfer roller having an extended useable life.

The invention provides a particle transfer roller characterized by:
a core;
an exterior layer of polyurethane on the core, the polyurethane being copolymerized with a charge control agent of the formula 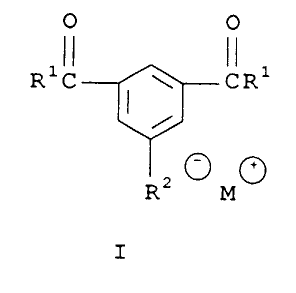
where R¹ represents: 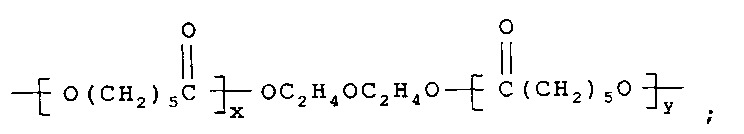
R² represents sulfonate, oxyphenylene sulfonate, oxycyclohexylene sulfonate or p-toluenesulfonamidosulfonyl;
x and y are integers which together are of sufficient value to achieve an R¹ molecular weight of 300 to 30,000;
M represents hydrogen, an alkali metal, ammonium or P⁺(C₆H₅)₃CH₃;
wherein the charge control agent is nonleachable from the polyurethane and is present in an amount sufficient to impart a selected amount of electric charge resistivity to the polyurethane;
and wherein the particle transfer roller has a Shore A hardness of from about 15 to about 40.

The invention also provides a method of cleaning a moving web, characterized by contacting the web with a particle transfer roller having an exterior layer of polyurethane having the charge control agent of Formula I copolymerized therein and having a Shore A hardness of from about 15 to about 40, the nonleachable charge control agent being present in an amount sufficient to impart a selected amount of electric charge resistivity to the polyurethane.

The particle transfer roller of the invention, and method for its use, provide good charge control without the problem of leaching out of the charge control agent. The particle transfer roller does not contaminate the web being cleaned. The particle transfer roller effectively retains the charge control agent, extending its useful lifetime.

Figure 1 is an elevated view of a particle transfer roller of the invention in contact with a web.

Figure 2 is an elevated view of a particle transfer roller of the invention in contact with a web and having a backing roller at the region of contact.

Figure 3 is an elevated view of a particle transfer roller of the invention in contact with a film support and with charge measuring apparatus positioned as shown.

The particle transfer rollers of the invention are formed from polyurethane elastomers, using starting materials and methods that are well known in the art, and are copolymerized with a charge control agent further described below.

The polyurethane elastomers are formed by reacting polyisocyanate prepolymers, formed from an excess of an isocyanate, a hardener, and a plasticizer. The hardener comprises a polyol crosslinked and/or chain extended with at least one additional polyol. Prepolymers and hardeners useful in forming the particle transfer rollers of the invention are described in US-A-4,762,941.

The plasticizer is added to control the hardness of the polyurethane elastomer in order to provide a resilient material useful in its intended environment as a particle transfer roller. Typically, a plasticizer such as a phthalate, for example, dibutyl terephthalate, provides good control over the hardness of the formed polyurethane article. Useful plasticizers also include adipates and glutarates and the like.

The charge control agent is a polyol that can be added to the polyol hardener in forming the polyurethane in an amount replacing a desired weight percentage of the hardener, as described in the Examples below. The nonleachable charge control agent should be present in an amount sufficient to impart the desired or selected amount of electric charge resistivity to the formed polyurethane roller. In a preferred embodiment, the charge control agent is present in the amount of from about 1 percent to about 8 percent by weight with the polyurethane.

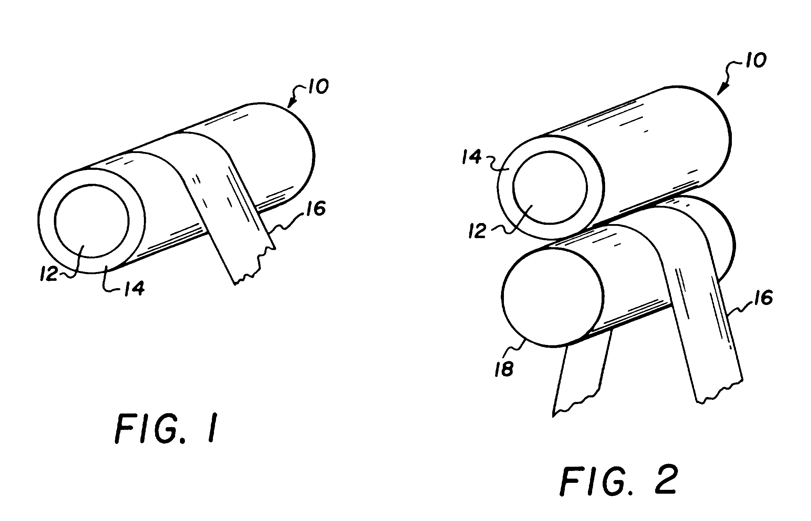

FIG. 1 illustrates a particle transfer roller of the invention. Particle transfer roller 10 has a core 12 and an exterior polyurethane layer 14 over core 12's entire axially extending surface. Core 12 is made of rigid material such as stainless steel or aluminum. Layer 14 comprises polyurethane copolymerized with a charge control agent as described herein. Layer 14 is preferably applied to core 12 through a conventional casting process; however, it is also within the scope of the invention to cast layer 14 separately and then adhere or otherwise attach it to core 12. After layer 14 has been applied to core 12, conventional grinding techniques may be used to produce the desired finish and to obtain symmetry around the circumference of roller 10. The surface finish of layer 14 can in some applications be "as-cast", that is, without additional finishing steps carried out after casting the polyurethane in the roller mold. An as-cast coating 14 surface is generally sufficient for cleaning a web such as a photographic film and typically ranges from about 5 to 10 Ra. Other applications, such as when web 16 is paper, may require that the surface of coating 14 have additional finishing steps carried out to produce a smoother finish, such as a satin surface finish of about 60 to 120 Ra.

Layer 14 need not be applied over the entire axially extending surface of core 12. Rather, layer 14 only need be applied to the area that will contact and clean the web in the intended use. Layer 14 has a Shore A hardness in the range of from about 10 to about 40 durometer, and a preferred hardness of about 25 durometer. A lower durometer coating is prone to accelerated wear and damage, especially in applications requiring a high web speed and/or acceleration. A higher durometer coating can result in leaving unacceptable marks and impressions on the web. A preferred durometer for layer 14 is about 25. The thickness of layer 14 can depend on the intended application and factors such as the desired lifetime of roller 10, the web speed and acceleration, the anticipated rate of surface wear of roller 10, and the like. In one embodiment, layer 14 has a thickness in the range of 6.35 to 12.7 mm.

FIG. 1 shows roller 10 shown in contact with web 16 in a wrap mode configuration, that is, with web 16 wrapped around roller 10. A sufficient wrap tension should be provided to maintain web 16 in contact with roller 10 during cleaning as further described below. FIG. 2 illustrates an embodiment of the invention termed "positive contact mode" in which a backing roller 18 is provided to support the opposite side of web 16 at the region of contact of web 16 with roller 10. In this configuration, the wrap tension of web 16 against roller 10 can be lower than in the wrap mode shown in FIG. 1 since roller 10 and backing roller 18 provide a nip therebetween for maintaining sufficient contact force between web 16 and roller 10. Whether one employs a wrap mode or a contact mode, a particle transfer roller functions in a well known manner to remove particles from a web by contact with the moving web. The particle transfer roller has a larger coefficient of adhesion than that of the web, enabling the particle transfer roller to pull particles free of the web to accumulate on the surface of the particle transfer roller. The resiliency of the particle transfer roller is important for effective particle removal, as at durometers exceeding 40 Shore A, polyurethane roller 10 has a decreased capability for removing particles from web 16.

Particle transfer rollers can be made from any one of a number of commercially available polyurethane two-component mixes with a plasticizer additive and to which mixture a polyol charge control agent is added, such as NUCLEAR sold by Samuel Bingham Co., Conathane TU-4010, W-645 from Winfield Industries Inc., Buffalo, N.Y. and sold under the trade name Winthane, and LB22800 from American Roller Co. The following examples illustrate the preparation of a polyurethane particle transfer roller incorporating a charge control agent of the invention present in the described amounts.

### EXAMPLES 1-4

A two-component Conathane TU-4010 formulation comprising Parts A and B is used to form a polyurethane particle transfer roller of the invention. Part A is an isocyanate prepolymer and Part B is a polyol hardener. The charge control agent replaces a mole percentage of Part B. A third component, Part C, is a plasticizer such as dibutyl terephthalate which is provided for the purpose of lowering the durometer of the roller to a desired value.

The ingredients are weighed out directly into a mixing vessel as rapidly as possible. Part B is introduced into the vessel in an amount of 100 parts by weight decreased by the parts by weight of charge control agent added. A specified amount of a charge control agent,
bis[oxydiethylenebis(polycaprolactone)yl]5-sulfo-1,3-benzenedicarboxylate-methyltriphenylphosphonium salt (referred to hereinafter as "EK CCA"), is added to the vessel and the contents thoroughly stirred. The EK CCA has the structure represented by 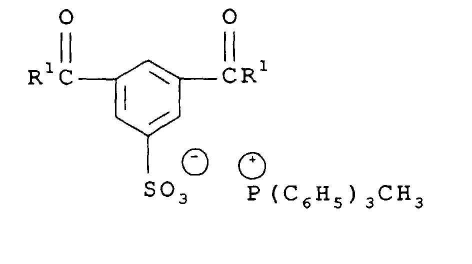 where R¹ represents: 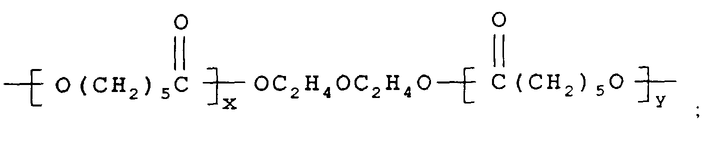 and where x and y are selected to provide a molecular weight for the R¹ group of about 530.

In Examples 1-4, 1 part, 2 parts, 3 parts, and 4 parts by weight of Kodak CCA, respectively, are added to 99, 98, 97, and 96 parts by weight, respectively, of Part B.

In each Example, Part C is then added to the vessel in an amount dependent on the desired durometer of the roller. The durometer can range from 40 Shore A when adding no amount of Part C to about 10 Shore A when adding about 0.6 parts of Part C per part of Part B by weight. Durometers of between 10 and 40 Shore A are obtained by mixing intermediate such ratios of Part C to Part B as described and recommended by the manufacturer. The contents of the vessel are then mixed.

10 parts by weight of Part A are then introduced to the vessel and the resulting solution is well mixed. The solution is degassed under vacuum for 2 minutes at 711 - 737 mm (of mercury) after the collapse of the head. A steel core is centrally positioned in a cylindrical mold and the solution poured into the mold. The mold is cured in an oven for 16 hours at 100 °C to form the casting. The mold and casting are cooled to room temperature after which the core with the casting thereon is removed and deflashed if necessary.

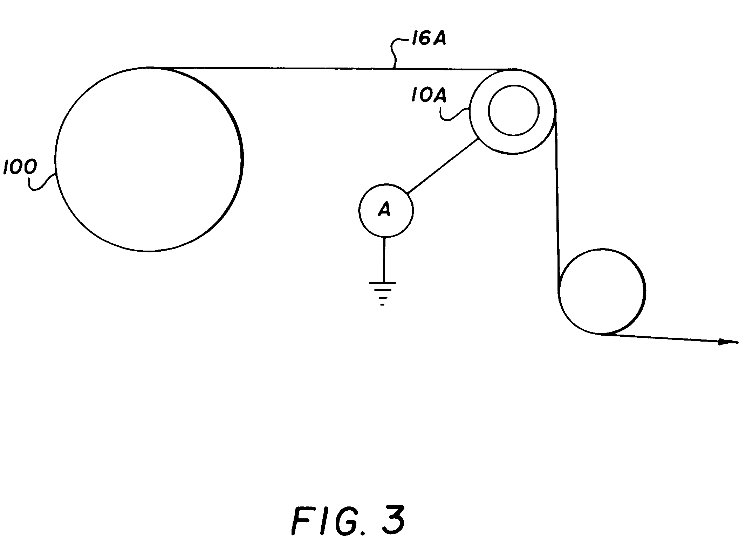

The electrical properties of the four rollers of the invention of Examples 1-4 are determined using the apparatus shown in FIG. 3. A film roll 100 holding a commercially available 35 mm photographic film 16A is positioned as shown. Film 16A is wrapped around polyurethane roller 10A. Roller 10A is allowed to freewheel against film 16A which is conveyed in the direction indicated at a speed of 1.0 m/s for all films tested, other than Kodacolor film which is conveyed at 3.5 m/s. The same tests are run, but using a particle transfer roller containing a conventional, commercially available charge control agent sold under the name Larostate present in the same weight proportions as the charge control agent of the invention. The surface charge for each run was measured and the results shown in Table I below.

**TABLE I**

| | | | Charge (nC/m²): | | |
|---|---|---|---|---|---|
| EX: | Charge Control Agent | EASTMAN Color Negative | EKTAR 1000 | Kodacolor | Vericolor |
| 1 | EK CCA | 1270 | 353 | 57 | 304 |
| | Larostat | 1130 | 433 | 30 | 665 |
| 2 | EK CCA | 344 | 304 | 24 | 275 |
| | Larostat | 281 | 208 | 53 | 258 |
| 3 | EK CCA | 160 | 218 | 29 | 218 |
| | Larostat | 194 | 276 | 64 | 124 |
| 4 | EK CCA | 79 | 276 | 25 | 261 |
| | Larostat | 147 | 200 | 75 | 134 |

The results demonstrate that the polyurethane rollers of the invention copolymerized with the non-leachable charge control agent exhibit a charge control capability comparable in toto to a polyurethane roller having a leachable charge control agent present in the same amounts.

The particle transfer roller and method of the invention are useful in most web-cleaning applications, and particularly in those in which maintaining good particle cleaning efficiency is desired. The invention can therefore be employed in uses such as removing particulate contamination from exposed photographic film used in film projection systems, and in cleaning photographic film in preparation for or subsequent to applying emulsion layers thereon, to name but a few.

The invention has been described in detail with particular reference to preferred embodiments thereof, but it will be understood that variations and modifications can be effected within the scope of the invention as claimed.

## Claims

1. A particle transfer roller characterized by:
a core;
an exterior layer of polyurethane on the core, the polyurethane being copolymerized with a charge control agent of the formula 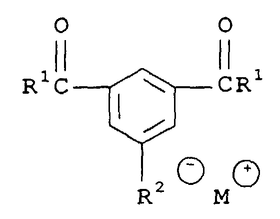
where R¹ represents: 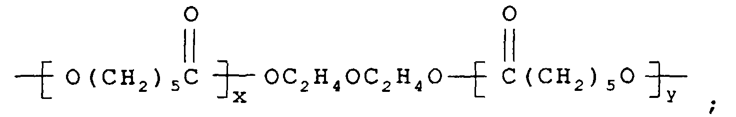
R² represents sulfonate, oxyphenylene sulfonate, oxycyclohexylene sulfonate or p-toluenesulfonamidosulfonyl;
x and y are integers which together are of sufficient value to achieve an R¹ molecular weight of 300 to 30,000; and
M represents hydrogen, an alkali metal, ammonium or P⁺(C₆H₅)₃CH₃;
wherein the charge control agent is nonleachable from the polyurethane and is present in an amount sufficient to impart a selected amount of electric charge resistivity to the polyurethane;
and wherein the particle transfer roller has a Shore A hardness of from about 15 to about 40.

2. The particle transfer roller of Claim 1, characterized in that the charge control agent is present in the amount of from about 1 percent to about 8 percent by weight with the polyurethane.

3. The particle transfer roller of Claim 2, characterized in that the charge control agent is bis[oxydiethylenebis(polycaprolactone)yl]5-sulfo-1,3-benzenedicarboxylate-methyltriphenylphosphonium salt.

4. The particle transfer roller of Claim 1, characterized in that the polyurethane layer has a thickness in the range of 6.35 to 12.7 mm.

5. The particle transfer roller of Claim 1, characterized in that the surface finish of the polyurethane layer is in the range of 5 to 10 Ra.

6. The particle transfer roller of Claim 1, characterized in that the surface finish of the polyurethane layer is in the range of 60 to 120 Ra.

7. A method of cleaning a moving web, characterized by contacting the web with a particle transfer roller having an exterior layer of polyurethane having a charge control agent copolymerized therein and having a Shore A hardness of from about 15 to about 40, and wherein the charge control agent has the formula 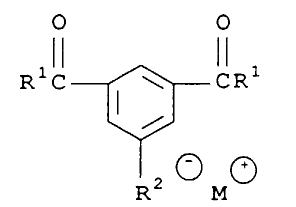 where R¹ represents: 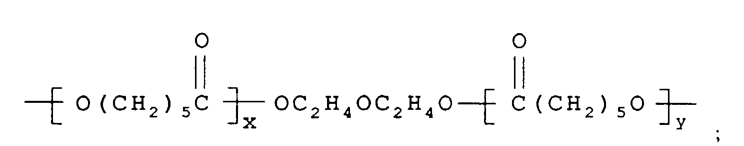
R² represents sulfonate, oxyphenylene sulfonate, oxycyclohexylene sulfonate or p-toluenesulfonamidosulfonyl;
x and y are integers which together are of sufficient value to achieve an R¹ molecular weight of 300 to 30,000; and
M represents hydrogen, an alkali metal, ammonium or P⁺(C₆H₅)₃CH₃;
and wherein the charge control agent is nonleachable from the polyurethane and is present in an amount sufficient to impart a selected amount of electric charge resistivity to the polyurethane.

8. The method of Claim 7, characterized in that the web is a photographic film.

9. The method of Claim 7, characterized in that the charge control agent is present in the amount of from about 1 percent to about 8 percent by weight with the polyurethane.

10. The method of Claim 9, characterized in that the charge control agent is bis[oxydiethylenebis(polycaprolactone)yl]5-sulfo-1,3-benzenedicarboxylate-methyltriphenylphosphonium salt.

## Patentansprüche

1. Partikelübertragungswalze, gekennzeichnet durch:
einen Kern;
eine äußere Schicht aus Polyurethan auf dem Kern, wobei das Polyurethan mit einem Ladungssteuerungsmittel der Formel 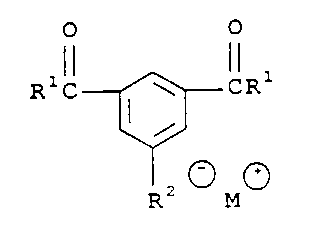
copolymerisiert ist, in der R¹ steht für: 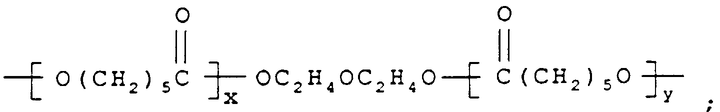
R² steht für Sulfonat, Oxyphenylensulfonat, Oxycyclohexylensulfonat oder p-Toluolsulfonamidosulfonyl;
x und y sind Zahlen, die zusammen einen ausreichenden Wert derart aufweisen, daß R¹ ein Molekulargewicht von 300 bis 30000 aufweist; und
M steht für Wasserstoff, ein Alkalimetall, Ammonium oder p⁺(C₆H₅)₃CH₃;
wobei das Ladungssteuerungsmittel nicht aus dem Polyurethan auslaugbar ist und in einer Menge vorliegt, die ausreicht, um dem Polyurethan einen ausgewählten Grad eines elektrischen Ladungswiderstandes zu verleihen;
und wobei die Partikelübertragungswalze eine Shore-A-Härte von etwa 15 bis etwa 40 aufweist.

2. Partikelübertragungswalze nach Anspruch 1, dadurch gekennzeichnet, daß das Ladungssteuerungsmittel in einer Menge von etwa 1 bis etwa 8 Gew.-% mit dem Polyurethan vorliegt.

3. Partikelübertragungswalze nach Anspruch 2, dadurch gekennzeichnet, daß das Ladungssteuerungsmittel ein Bis[oxydiethylen-bis(polycaprolacton)yl]5-sulfo-1,3-benzoldicarboxylat-methyltriphenylphosphoniumsalz ist.

4. Partikelübertragungswalze nach Anspruch 1, dadurch gekennzeichnet, daß die Polyurethanschicht eine Dicke im Bereich von 6,35 bis 12,7 mm aufweist.

5. Partikelübertragungswalze nach Anspruch 1, dadurch gekennzeichnet, daß der Oberflächen-Finish der Polyurethanschicht im Bereich von 5 bis 10 Ra liegt.

6. Partikelübertragungswalze nach Anspruch 1, dadurch gekennzeichnet, daß der Oberflächen-Finish der Polyurethanschicht im Bereich von 60 bis 120 Ra liegt.

7. Verfahren zur Reinigung eines sich bewegenden Bandes oder einer sich bewegenden Bahn, dadurch gekennzeichnet, daß das Band bzw. die Bahn mit einer Partikelübertragungswalze in Kontakt gebracht wird, die eine äußere Schicht aus Polyurethan mit einem eincopolymerisierten Ladungssteuerungsmittel aufweist sowie einer Shore-A-Härte von etwa 15 bis etwa 40, und wobei das Ladungssteuerungsmittel die Formel hat: 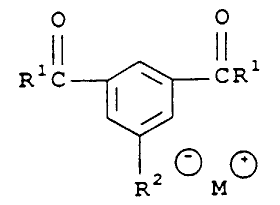 worin R¹ steht für: 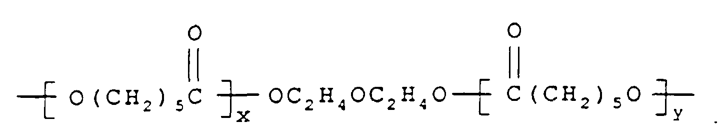
worin ferner R² steht für Sulfonat, Oxyphenylensulfonat, Oxycyclohexylensulfonat oder p-Toluolsulfonamidosulfonyl;
worin x und y ganze Zahlen sind, die zusammen einen ausreichenden Wert ergeben, derart, daß R¹ ein Molekulargewicht von 300 bis 30000 aufweist; und
worin m steht für Wasserstoff, ein Alkalimetall, Ammonium oder p⁺(C₆H₅)₃CH₃;
und wobei das Ladungssteuerungsmittel aus dem Polyurethan nicht auslaugbar ist und in einer Menge vorliegt, die ausreicht, um dem Polyurethan einen ausgewählten Grad eines elektrischen Ladungswiderstandes zu verleihen.

8. Verfahren nach Anspruch 7, dadurch gekennzeichnet, daß das Band oder die Bahn ein photographischer Film ist.

9. Verfahren nach Anspruch 7, dadurch gekennzeichnet, daß das Ladungssteuerungsmittel in einer Menge von etwa 1 bis etwa 8 Gew.-% mit dem Polyurethan vorliegt.

10. Verfahren nach Anspruch 9, dadurch gekennzeichnet, daß das Ladungssteuerungsmittel ein Bis[oxydiethylen-bis(polycaprolacton)yl]5-sulfo-1,3-benzoldicarboxylat-methyltriphenylphosphoniumsalz ist.

## Revendications

1. Rouleau pour transfert de particules caractérisé par :
un mandrin ;
une couche extérieure de polyuréthanne sur le mandrin, le polyuréthanne étant copolymérisé avec un agent de contröle de charge ayant la formule 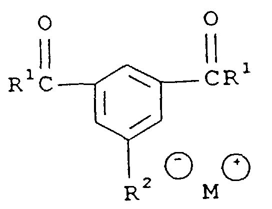
où R¹ représente : 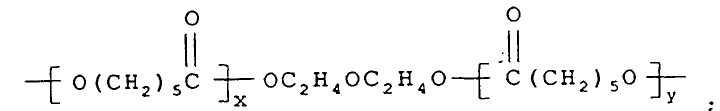
R² représente un sulfonate, un sulfonate d'oxyphénylène, un sulfonate d'oxycyclohexylène ou un groupe p-toluènesulfonamidosulfonyle ;
x et y sont des nombres entiers qui, à eux deux, ont une valeur suffisante pour atteindre un poids moléculaire de R¹ compris entre 300 et 30 000 ; et
M représente un hydrogène, un métal alcalin, un ammonium ou P⁺(C₆H₅)₃CH₃ ;
où l'agent de contrôle de charge ne peut pas être extrait du polyuréthanne par lessivage et se trouve en quantité suffisante pour communiquer une quantité choisie de résistivité de charge électrique au polyuréthanne ;
et où le rouleau pour transfert de particules présente une dureté Shore A comprise approximativement entre 15 et 40.

2. Rouleau pour transfert de particules selon la revendication 1, caractérisé en ce que l'agent de contrôle de charge est associé au polyuréthanne dans une quantité comprise entre environ 1 pourcent et environ 8 pourcent en poids.

3. Rouleau pour transfert de particules selon la revendication 2, caractérisé en ce que l'agent de contrôle de charge est un sel de bis[oxydiéthylènebis(polycaprolactone)yl]5-su1fo-1,3-benzènedicarboxylate-méthyltriphénylphosphonium.

4. Rouleau pour transfert de particules selon la revendication 1, caractérisé en ce que l'épaisseur de la couche de polyuréthanne est comprise entre 6,35 et 12,7 mm.

5. Rouleau pour transfert de particules selon la revendication 1, caractérisé en ce que la rugosité de surface de la couche de polyuréthanne est comprise entre 5 et 10 Ra.

6. Rouleau pour transfert de particules selon la revendication 1, caractérisé en ce que la rugosité de surface de la couche de polyuréthanne est comprise entre 60 et 120 Ra.

7. Méthode de nettoyage d'une bande mobile, caractérisée en ce que la bande est mise en contact avec un rouleau pour transfert de particules, muni d'une couche extérieure de polyuréthanne copolymérisé avec un agent de contrôle de charge, présentant une dureté Shore A comprise approximativement entre 15 et 40, et dans laquelle l'agent de contrôle de charge a la formule 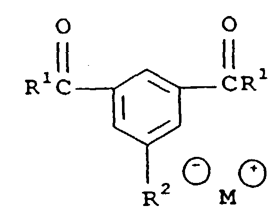 où R¹ représente : 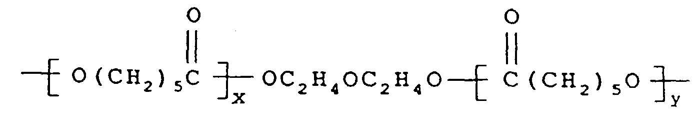
R2 représente un sulfonate, un sulfonate d'oxyphénylène, un sulfonate d'oxycyclohexylène ou un groupe p-toluènesulfonamidosulfonyle ;
x et y sont des nombres entiers qui, à eux deux, ont une valeur suffisante pour atteindre un poids moléculaire de
R¹ compris entre 300 et 30 000 ; et
M représente un hydrogène, un métal alcalin, un ammonium ou P⁺(C₆H₅)₃CH₃ ;
et où l'agent de contrôle de charge ne peut pas être extrait du polyuréthanne par lessivage et se trouve en quantité suffisante pour communiquer une quantité choisie de résistivité de charge électrique au polyuréthanne.

8. Méthode selon la revendication 7, caractérisée en ce que la bande est un film photographique.

9. Méthode selon la revendication 7, caractérisée en ce que l'agent de contrôle de charge est associé au polyuréthanne dans une quantité comprise entre environ 1 pourcent et environ 8 pourcent en poids.

10. Méthode selon la revendication 9, caractérisée en ce que l'agent de contrôle de charge est un sel de bis[oxydiéthylènebis(polycaprolactone)yl]5-sulfo-1,3-benzènedicarboxylate-méthyltriphénylphosphonium.
